# EUROPEAN PATENT SPECIFICATION

(11) **EP 0 666 968 B1**
(45) Date of publication and mention of the grant of the patent: **20.11.1996**
(21) Application number: 93923544.6
(22) Date of filing: 25.10.1993
(51) Int. Cl.: F16H 1/28, F16H 57/02

(54) **EPICYCLIC REDUCTION GEAR UNIT**
EPIZYKLISCHES UNTERSETZUNGSGETRIEBE
ENSEMBLE REDUCTEUR EPICYCLOiDAL

(30) Priority: 04.11.1992 IT PD920195
(43) Date of publication of application: 16.08.1995
(73) Proprietor: CASAROTTO, G. & C. S.R.L., I-45021 Badia Polesine (IT)
(72) Inventor: CASAROTTO, Giorgio, I-45021 Badia Polesine (IT)
(74) Representative: Cantaluppi, Stefano
(86) International application number: EP9302942
(87) International publication number: WO9410478

(56) References cited:
- DE-A- 3 634 894
- GB-A- 2 077 204
- US-A- 2 765 669
- US-A- 4 583 420
- PATENT ABSTRACTS OF JAPAN vol. 16, no. 239 (M-1258) 02 June 1992 & JP,A,04 050 538 (TAKAHASHI) 12 February 1992

## Description

### Technical Field

This invention relates to an epicycloidal gear reduction unit comprising:
a case,
a planet gear carrier mounted rotatably within said case,
power take-off means made rotatively rigid with the planet gear carrier, and
a rolling type bearing located between said planet gear carrier and said case for supporting the power take-off means/planet gear carrier assembly.

In this context, the term "reduction unit" is used to denote a power transmission unit effective to step down or up the rotational speed of a driven shaft relative to a drive shaft.

### Background Art

Reduction units with the above-noted features have been extensively known in the relevant art, and reference can be made, for example, to the following technical literature: Gerit "Riduttori epicicloidali a gioco ridotto alpha", published by Gerit S.p.A. of Milan, Italy, 1991; and Transmital Bonfiglioli "Riduttori epicicloidali Serie 300", published by Transmital Bonfiglioli S.p.A. of Forlì, Italy, 1988.

A reduction unit provided with the above noted figures is known from JP-A-4050538.

Currently available epicicloidal reduction units, while fully satisfying the operational requirements of their design, still have a drawback in that they are comparatively intrusive in axial dimension, and especially so with those reduction units which have a slow-motion shaft designed to accommodate external loads additionally to the stresses inherent to any epicycloidal mechanism.

In such instances, it is not uncommon for that the portion of the reduction unit which is to carry the aforesaid shaft to have an axial length which exceeds that of the portion enclosing the epicycloidal gearing.

This intrusive dimension is due primarily to space requirements of the bearing mounts for supporting the slow-motion shaft within the case, and can be reduced somewhat where said shaft is applied no forces external of the reduction unit or additional bearings can be provided outside the case. In either instances, in fact, prior constructions provide for the slow-motion shaft to be supported in a single bearing located close against the planet carrier.

The resulting bulk dimension, albeit less than in other traditional designs, is still significant, however.

The technical problem addressed by this invention is to provide an epicycloidal gear reduction unit which is conceived, both in construction and performance, to minimize its bulk, especially along the axial direction.

### Disclosure of the Invention

This problem is solved according to the invention by a reduction unit as indicated in the preamble being characterized in that said planet gear carrier comprises a single disc-shaped member mounted at one axial end of the unit and having a plurality of planet gear stub shafts projecting therefrom toward the other axial end of the unit, and in that said bearing has a first and a second track formed respectively directly around the radially outermost periphery of said disc-shaped member and in the part of said case facing said disc-shaped member.

In this way, the axial bulk of the bearing which is to take up the shaft loads can be confined within the axial bulk of the epicycloidal drive. Concurrent therewith is no significant increase of the bulk dimensions in the radial direction, since the above structure can be arranged to lie within the radial outline dimensions which are typical of the ring gear with which the reduction unit would be traditionally equipped.

### Brief Description of Drawings

The invention will now be further described with reference to some preferred embodiments thereof, shown by way of example and not of limitation in the accompanying drawings, in which:
Figure 1 is a longitudinal section view showing schematically an epicycloidal gear reduction unit according to the invention;
Figure 2 is a longitudinal section showing schematically a cascaded multiple epicycloidal gear reduction system according to a second embodiment of the invention;
Figure 3 is a longitudinal section view showing schematically a rotary casing epicycloidal gear reduction unit according to a third embodiment of the invention; and
Figures 4, 5, 6, respectively 7, 8, 9, are enlarged scale sectional views of two respective details of the three reduction unit variants shown in the previous Figures.

### Best Mode of Carrying Out the Invention

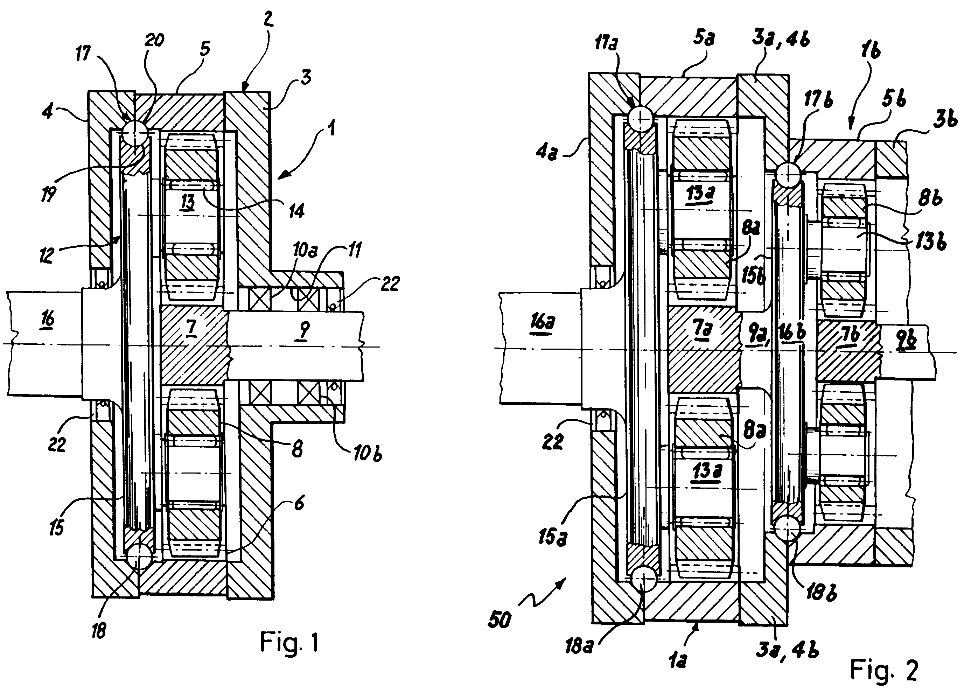

Shown in Figure 1 is a first embodiment of an epicycloidal gear reduction unit according to this invention; this first embodiment is generally indicated at 1.

The reduction unit 1 comprises a case or casing 2 formed of two flanged members 3, 4 with a ring gear 5 therebetween. The flanged members 3, 4 are clamped to the ring gear 5 in a conventional way using screws, tie rods, brackets, or the like fastening means, not shown.

The ring gear 5 has, in a manner known per se, an internal toothing 6 and is a part of an epicycloidal mechanism also comprising a sun gear 7 and plural planet gears 8. The sun gear 7 is keyed to the end of a shaft 9, being referred to as the fast-motion shaft of the reduction unit 1 and supported on a tubular hub 11 of the flanged member 3 through bearings 10a,b.

The planet gears 8 are mounted idle on a planet gear carrier 12 which includes respective stub shafts 13 whereon the planet gears are journalled through intervening bearings 14; the planet gear carrier 12 includes a disc-shaped member 15 carrying said stub shafts 13.

The disc-shaped member 15 is rigid with a shaft 16, being referred to as the slow-motion shaft of the reduction unit and formed of preference integrally therewith. Both shafts are provided, moreover, with oil seals 22.

It is understood that either shafts 9, 16, as the power take-off means of the reduction unit 1, may be any desired configurations; examples of such configurations, well known to the skilled ones in the art and related to the power take-off means which correspond to the shaft 16, are depicted in Figures 7 to 9 showing respectively a grooved profile female coupling member 16a, a keyed coupling member 16b, and a member 16c for direct coupling to a ring gear 16d, for example.

The slow-motion shaft 16 with the planet carrier 12 is supported on the case 2 by means of a rolling bearing 17 of the ball type. The balls are designated 18 and held in respective tracks 19, 20.

Track 19 is formed directly around the periphery of the disc-shaped member 15. Track 20 is formed half on the flanged member 4 and half on the ring gear 5, in the interconnect region thereof.

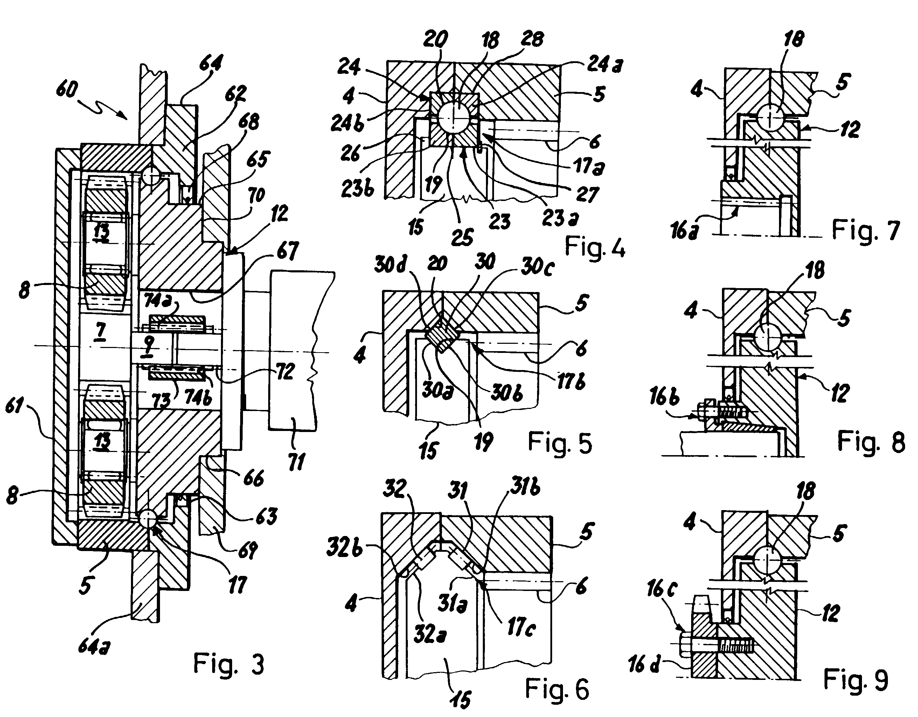

Shown in Figures 4, 5 and 6 are three variants of the bearing 17, respectively indicated at 17a, 17b and 17c. Similar parts carry the same reference numerals as in the previous Figures.

The bearing 17a has balls 18 and two races, respectively an inner race 23 and an outer race 24 formed with ball tracks 19 and 20, respectively. The bearing races 23, 24 comprise two matched half-races each, 23a,b and 24a,b, respectively. The inner race 23 is retained in a bearing block 25 formed on the periphery of the disc-shaped member 15, between a shoulder 26 and a snap ring 27. The outer race 24 is retained in a bearing block 28 formed on the mating surfaces of the flanged member 4 and the ring gear 5.

The bearing 17b is a plain bearing having a bushing 30 with a square cross-sectional shape and pairs of adjacent sides 30a,b and 30c,d, respectively, held in rubbing contact with respective V-shaped tracks 19 and 20 on the disc-shaped member and the reduction unit casing.

The bearing 17c is of the type with a double tier of rollers 31, 32 fitted between respective tracks 31a,b and 32a,b. The tracks 31a, 32a are formed around the periphery of the disc-shaped member 15 and the tracks 31b, 32b are formed on the respective facing surfaces of the ring gear 5 and the flanged member 4.

Shown in Figure 2 is a cascaded reduction system, generally indicated at 50, which comprises plural reduction units (two, respectively referenced 1A and 1B, in this example) arranged. in series with one another. The components of each reduction unit 1A,B are basically the same as detailed in the description of the example shown in Figure 1, to which reference is directed. Accordingly, similar parts will be denoted by the same reference numerals with an "A" suffix added for the components of reduction unit 1A and a "B" suffix added for the components of reduction unit 1B.

As may be seen, some of these components are in common. These are, specifically, the flanged member 3A, 4B intervening between the ring gears 5A,B, and the shaft 9A, 16B which also forms the slow-motion shaft for reduction unit 1B and the fast-motion shaft for reduction unit 1A.

A major advantage of the cascaded reduction system 50 is its compact axial dimension, despite the fact that the individual epicycloidal reduction units which compose it are all of the type with a supported planet gear carrier (in bearings 17a,b, respectively, in the example considered).

Figure 3 shows a further embodiment of the invention, generally indicated at 60, which is specially useful in applications requiring that the planet gear carrier be held stationary and the casing rotated. Typical applications of this kind are, for instance, the constructions of rotary drum capstans and vehicle wheel hubs. Here again, similar parts carry the same reference numerals as in the previous embodiments.

In reduction unit 60, the ring gear 5 is included between a cover 61 and a flanged member 62 having a first flange 63 which extends radially inwards and a second flange 64 which extends radially outwards. Attached to the second flange is a driven member 64a, such as a wheel flange.

The planet gear carrier 12 has, additionally to the bearing 17, two coaxial ring-shaped surfaces 65, 66 and a central cylindrical passage 67. Arranged between the ring-shaped surface 65 and the first flange 63 is an oil seal 68. A stationary part 69 is attached to the planet carrier 12 at the location of a shoulder 70 between the surfaces 65, 66. Also provided is a motor 71 having a motor casing attached to the planet carrier 12 and a motor shaft 72 coupled, as by means of a sleeve coupling 73 and respective splined couplings 74a,b, to the fast-motion shaft 9 made rigid with the sun gear 7.

Thus, the invention does solve the problem proposed, while affording the following advantages.

In the first place, it affords significant savings in weight by virtue of the compact axial dimension of the structure described above. In addition, its exterior structure is strong and rigid under externally applied stresses, and its cost does not exceed that of corresponding prior art constructions.

## Claims

1. An epicycloidal gear reduction unit comprising:
a case (2),
a planet gear carrier (12) mounted rotatably within said case,
power take-off means (16) made rotatively rigid with the planet gear carrier, and
a rolling type bearing (17) located between said planet gear carrier (12) and said case (2) for supporting the power take-off means/planet gear carrier assembly, characterized in that said planet gear carrier (12) comprises a single disc-shaped member (15) mounted at one axial end of the unit and having a plurality of planet gear stub shafts (13) projecting therefrom toward the other axial end of the unit, and in that said bearing has a first and a second track (19, 20) formed respectively around the radially outermost periphery of said disc-shaped member and in the part of said case (2) facing said disc-shaped member.

2. An epicycloidal gear reduction unit according to Claim 1, wherein said case (2) comprises two parts (4, 5) joined together at the second track (20), said second track being formed partly on the one and partly on the other of said parts (4, 5).

3. An epicycloidal gear reduction unit according to Claim 2, wherein one of said case parts includes a ring gear (5) of said reduction unit in mesh engagement with said planet gears (8).

## Patentansprüche

1. Epizyklisches Untersetzungsgetriebe mit:
einem Gehäuse (2),
einem drehbar in dem Gehäuse befestigten Planetenradträger (12),
Abtriebsmitteln (16), die drehfest mit dem Planetenradträger sind, und
einem Wälzlager (17), daß zur Unterstützung der Abtriebsmittel/Planetenradträger-Anordnung zwischen dem Planetenradträger (12) und dem Gehäuse (2) angeordnet ist,
**dadurch gekennzeichnet**,
daß der Planetenradträger (12) ein einzelnes scheibenförmiges Teil (15) aufweist, welches an einem axialen Ende des Getriebes befestigt ist und welches mehrere Planetenradflanschwellen (13) besitzt, die von dem scheibenförmigen Teil zu dem anderen axialen Ende des Getriebes ragen, und daß das Lager eine erste und eine zweite Spur (19, 20) aufweist, die um den radial äußersten Umfang des scheibenförmigen Teils bzw. in dem Teil des Gehäuses (2), welches dem scheibenförmigen Teil zugewandt ist, gebildet sind.

2. Epizyklisches Untersetzungsgetriebe gemäß Anspruch 1,
bei dem das Gehäuse (2) zwei Teile (4, 5) aufweist, die bei der zweiten Spur (20) verbunden sind, wobei die zweite Spur teilweise an dem einen und teilweise an dem anderen der Teile (4, 5) gebildet ist.

3. Epizyklisches Untersetzungsgetriebe gemäß Anspruch 2,
bei dem einer der Gehäuseteile ein Hohlrad (5) des Untersetzungsgetriebes beinhaltet, welches im Eingriff mit den Planetenrädern (8) ist.

## Revendications

1. Réducteur épicycloïdal, comprenant :
un carter (2),
un porte-satellites (12) monté afin qu'il puisse tourner dans le carter,
une prise de force (16) qui présente une rigidité en rotation avec le porte-satellites, et
un palier (17) du type à éléments roulants placé entre le porte-satellites (12) et le carter (2) afin qu'il supporte l'ensemble formé par la prise de force et le porte-satellites, caractérisé en ce que le porte-satellites (12) comporte un seul organe (15) en forme de disque monté à une première extrémité axiale du réducteur et ayant plusieurs arbres rectilignes (13) de support de pignons satellites dépassant vers l'autre extrémité axiale du réducteur, et en ce que le palier comporte une première et une seconde voie (19, 20) formées respectivement autour de la périphérie radialement la plus externe de l'organe en forme de disque et dans la partie du carter (2) tournée vers l'organe en forme de disque.

2. Réducteur épicycloidal selon la revendication 1, dans lequel le carter (2) comporte deux parties (4, 5) raccordées l'une à l'autre au niveau de la seconde voie (20), la seconde voie étant formée partiellement sur l'une des parties et partiellement sur l'autre des parties (4, 5).

3. Réducteur épicycloïdal selon la revendication 2, dans lequel l'une des parties de carter comporte une couronne dentée (5) du réducteur qui est en prise avec les pignons satellites (8).
